# EUROPÄISCHE PATENTSCHRIFT

(11) **EP 1 386 761 B1**
(45) Veröffentlichungstag und Bekanntmachung des Hinweises auf die Patenterteilung: **12.04.2006**
(21) Anmeldenummer: 02017111.2
(22) Anmeldetag: 30.07.2002
(51) Int. Cl.: B60D 1/46

(54) **Höhenverstellbare Anhängerkupplung**
Height-adjustable trailer hitch
Attelage à hauteur réglable pour remorque

(43) Veröffentlichungstag der Anmeldung: 04.02.2004
(73) Patentinhaber: Rockinger GmbH, 80935 München (DE)
(72) Erfinder: Baumgartner, Richard, 80935 München (DE)
(74) Vertreter: Hoffmann, Eckart

(56) Entgegenhaltungen:
- EP-A- 0 155 338
- AT-B- 400 322
- AT-U- 1 287
- DE-A- 2 910 164
- US-A- 3 366 402

## Beschreibung

Die Erfindung betrifft eine höhenverstellbare Anhängerkupplung nach dem Oberbegriff des Patentanspruchs. 1.

Eine Anhängerkupplung dieser Art ist aus der AT 001 287 U1 bekannt. Bei der bekannten Anhängerkupplung sind zwei Riegel vorgesehen und in koaxialen Sacklöchern geführt. Die Sacklöcher befinden sich auf einander diametral gegenüberliegenden Seiten des Lagerzapfens. Ihr inneres Ende liegt jeweils im Abstand von der den Lagerzapfen aufnehmenden Lagerbohrung. Zwischen diesem inneren Ende eines jeweiligen Sacklochs und dem einen Ende des zugehörigen Riegels befindet sich eine Schraubendruckfeder, die den Riegelbolzen aus dem Sackloch heraus zu drücken sucht. Die auf die Riegelbolzen ausgeübte Vorspannung stützt sich somit auf dem Boden des jeweiligen Sacklochs und damit am Kupplungsträger ab.

Der Lagerzapfen erstreckt sich bei diesem Stand der Technik durch den Kupplungsträger hindurch, so daß sich eine relativ große Lagerlänge und damit verbunden eine längere Lebensdauer ergibt als es bei kleinerer Lagerlänge, wie etwa im Fall der EP 0.155 338 A, der Fall wäre. Trotzdem läßt sich das Auftreten von Lagerspiel nach gewisser Gebrauchsdauer nicht verhindern. So läßt sich im fabrikneuen Zustand zwar leicht ein vorgeschriebenes "Losdrehmoment" erreichen, das das Kupplungsmaul vor einer ungewollten Drehung um die Achse des Lagerzapfens schützt, d.h. es muß auf das Kupplungsmaul ein das Losdrehmoment übersteigendes Moment ausgeübt werden, damit sich das Kupplungsmaul aus seiner Ruhedrehstellung verdreht. Das sich nach einiger Zeit einstellende Lagerspiel der Lagerung des Kupplungsmauls an dem Kupplungsmaulträger, führt dann aber bald dazu, daß das Losdrehmoment immer kleiner wird und sich das Kupplungsmaul schließlich leicht, aber ungewollt aus seiner Ruhedrehstellung verdreht, z.B. als Folge von Vibrationen oder Stößen.

Die schon erwähnte EP 0 155 338 offenbart eine ähnliche höhenverstellbare Anhängerkupplung, bei der die Riegel durch eine auf die Schwenkplatte einwirkende Drehfeder in die Verriegelungsstellung vorgespannt werden.

Bei einer in der DE-PS 29 10 164 beschrieben höhenverstellbaren Anhängerkupplung sind zwei Riegel miteinander fluchtend im Kupplungsmaulträger geführt und durch eine zwischen ihnen angeordnete Druckfeder gegeneinander in die jeweilige Verriegelungsstellung vorgespannt.

Aufgabe der Erfindung ist es, eine höhenverstellbare Anhängerkupplung der angegebenen Art so auszugestalten, daß das Kupplungsmaul in seiner Ruhedrehstellung arretiert ist und auch nach langer Benutzungsdauer nur unter Überwindung eines gewissen Losdrehmoments aus der Ruhedrehstellung verdrehbar ist.

Diese Aufgabe wird erfindungsgemäß durch eine Anhängerkupplung mit den Merkmalen des Patentanspruchs 1 gelöst. Vorteilhafte Weiterbildungen der Erfindung sind in den Unteransprüchen gekennzeichnet.

Die zur Vorspannung der Riegel in ihre Verriegelungsstellung, in Form von Schraubendruckfedern an sich bereits bekannte Federanordnung wird gemäß der vorliegenden Erfindung mit einer zweiten Funktion versehen, nämlich als eine Rastfederanordnung für eine elastische Verrastung des Kupplungsmauls in dessen Ruhedrehstellung. So kann mit gegenüber dem Stand der Technik nur geringer Änderung das zuvor erwähnte Losdrehmoment über lange Zeit sichergestellt werden.

Bei einem bevorzugten Ausführungsbeispiel der Erfindung sind im Kupplungsmaulträger zwei einander bezogen auf den Lagerzapfen des Kupplungsmauls diametral gegenüberliegende Riegel vorgesehen, die jeweils durch eine Schraubendruckfeder nach außen vorgespannt werden. Bei einer solchen Anordnung brauchen lediglich die Riegelbohrungen im Kupplungsmaulträger, die jeweils einen der Riegel und eine der Federn aufnehmen, bis zur Lagerbohrung, die den Lagerzapfen aufnimmt, verlängert zu werden. An den Stellen des Lagerzapfens, die in der Ruhedrehstellung des Kupplungsmauls mit den Riegelbohrungen fluchten, werden Rastausnehmungen ausgebildet, in die die Federn Ober entsprechende Rastglieder oder, bei entsprechender Ausbildung auch direkt, eingreifen.

Die Erfindung wird nachfolgend anhand eines Ausführungsbeispiels unter Bezug auf die beiliegenden Zeichnungen näher erläutert. Es zeigen:
- Fig. 1: eine Draufsicht auf einen wesentlichen Teil einer Anhängerkupplung gemäß der Erfindung,
- Fig. 2: in etwas größerer Darstellung eine Draufsicht auf den Kupplungsmaulträger mit Kupplungsmaul,
- Fig. 3: eine Ansicht in Richtung des Pfeiles X in Fig. 2, die die Verriegelungsanordnung in Verriegelungsstellung zeigt
- Fig. 4: eine Ansicht in Richtung des Pfeiles X in Fig. 2, die die Verriegelungsanordnung in Entriegelungsstellung zeigt, und
- Fig. 5: eine Seitenansicht der Anordnung von Fig. 1.

Die Erfindung wir anhand eines Ausführungsbeispiels erläutert, das im grundsätzlichen Aufbau mit dem des in der EP 0 155 338 A beschriebenen Beispiels einer höhenverstellbaren Anhängerkupplung übereinstimmt. Die nachfolgende Erläuterung konzentriert sich daher vor allem auf die Unterschiede zu dieser bekannten Anhängerkupplung.

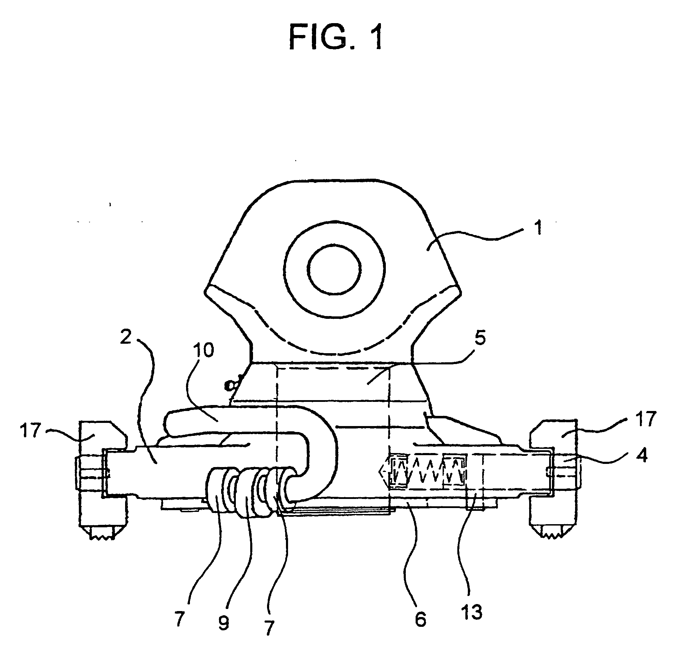

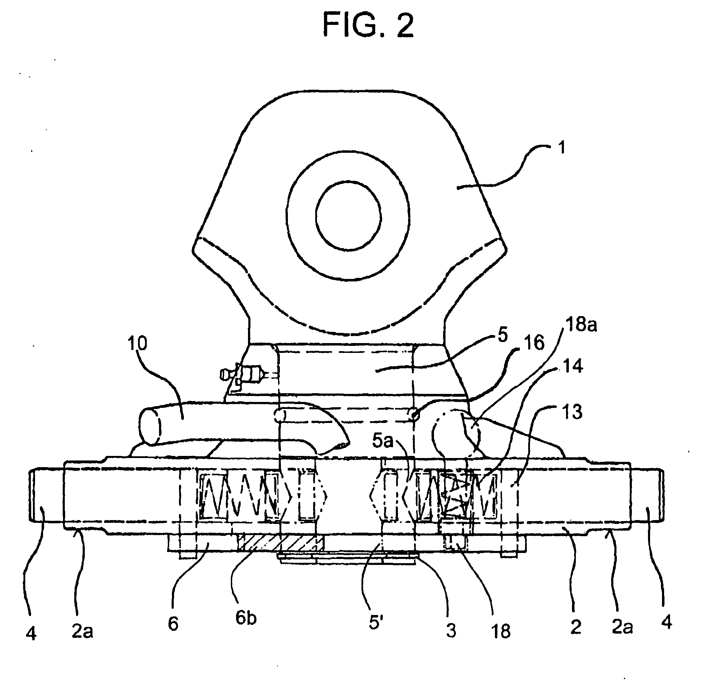

Wie in Fig. 1 dargestellt, ist ein Kupplungsmaul 1 an einem Kupplungsmaulträger 2 mittels eines Lagerzapfens 5 drehbar befestigt. Der Lagerzapfen 5 ist in eine den Kupplungsmaulträger 2 durchsetzende Lagerbohrung eingesteckt. Wie aus Fig. 2 erkennbar ist in zwei einander zugewandte Ringnuten von Lagerzapfen 5 und Kupplungsmaulträger 2 ist ein Draht 16 eingesteckt. Durch ihn werden beide unverschiebbar zusammengehalten. Der Kupplungsmaulträger 2 ist an seinen beiden Stirnseiten in den einander zugewandten Führungsnuten zweier Führungsschienen 17 vertikal beweglich geführt und in Fahrtrichtung (Vertikatrichtung in Fig. 1) formschlüssig gehalten ist. Die Führungsschienen können Teil eines nicht weiter dargestellten Anhängerbocks sein, wie er beispielsweise in der EP 0 155 338 A gezeigt und beschrieben ist.

Die Führungsschienen sind in an sich bekannter Weise mit Ausnehmungen im Grund der Führungsnuten versehen. Im Kupplungsmaulträger 2 sind Riegel 4 zwischen einer Verriegelungsstellung und einer Entriegelungsstellung verschiebbar gelagert. In ihrer Verriegelungsstellung ragen die Riegel aus den entgegengesetzten Stirnseiten des Kupplungsmaulträgers heraus und greifen jeweils in eine der Ausnehmungen ein. Dadurch wird der Kupplungsmaulträger in einer jeweils gewählten Höhenlage an den Führungsschienen 17 verriegelt. Soll eine andere Höhenlage der Kupplung eingestellt werden, müssen die Riegel 4 aus den Ausnehmungen heraus in ihre Entriegelungsstellung zurückgezogen werden, der Kupplungsmaulträger 2 in die neue Höhenlage gebracht werden und die Riegel 4 wieder in die Verriegelungsstellung gebracht werden, um in die Ausnehmungen, die der neuen Höhenlage entsprechen, einzugreifen.

Die Anordnung der Riegel 4 sowie der zu ihrer Verstellung dienenden Teile wird nachfolgend insbesondere anhand der Fig. 2 bis 4 erläutert.

In der Draufsicht von Fig. 2 ist ein Teil des noch zu erläuternden Handgriffs 10 der klareren Darstellung wegen weggelassen und ein Ansatz 6b einer Schwenkplatte 6 geschnitten dargestellt. Man erkennt in Fig. 2 abgesetzte Enden 2a des Kupplungsmaulträgers 2, die bei montierter Kupplung in die Führungsnuten der Führungsschienen 17 eintauchen. Aus ihnen ragen die hier in ihrer Verriegelungsstellung gezeigten Riegel 4 vor, die mit den beschriebenen Ausnehmungen der Führungsschienen 17 zusammenwirken. Vorzugsweise zwei Riegel 4 sind auf entgegengesetzten Seiten in miteinander fluchtenden Riegelbohrungen des Kupplungsmaulträgers 2 geführt. Zur Verstellung der Riegel 4 dient die erwähnte Schwenkplatte 6. Sie ist an dem dem Kupplungsmaul 1 abgewandten Ende des Lagerzapfens 5 drehbar auf diesen aufgesetzt und mit einem Sicherungsring 3 oder auf sonstige Weise gegen Abrutschen gesichert ist. Die Schwenkplatte 6 befindet sich also auf der dem Kupplungsmaul 1 abgewandten Seite des Kupptungsmaulträgers 2.

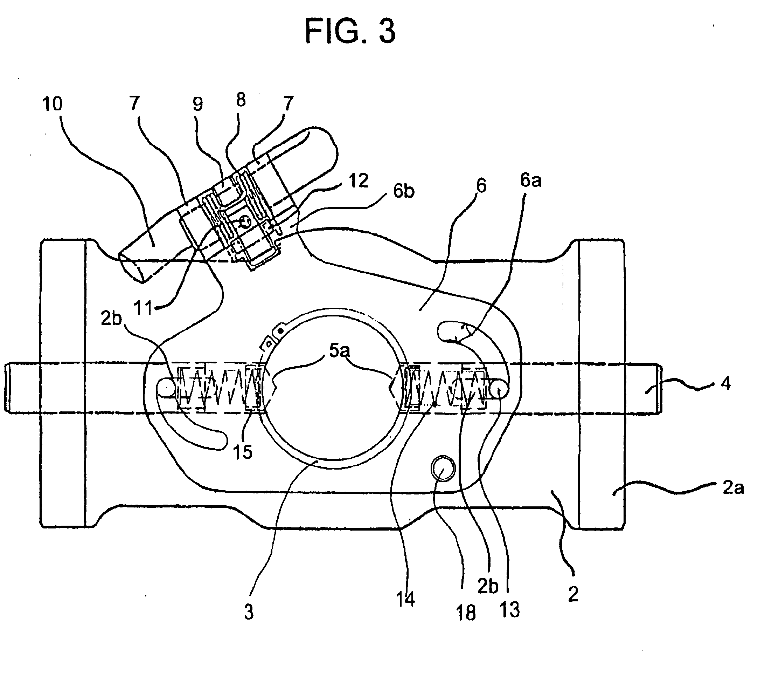

Fig. 3 zeigt eine Draufsicht auf den Kupplungsmaulträger in Richtung des Pfeiles X in Fig. 2.

Mit Hilfe von Zapfen 13 werden die beiden Riegel 4 und die Schwenkplatte 6 miteinander im Eingriff gehalten. Die Zapfen 13 durchsetzen entsprechende Bohrungen in den Riegeln 4 sowie je einen Führungsschlitz 6a in der Schwenkplatte 6 und einen Durchgangsschlitz 2b im Kupplungsmaulträger 2. Die Länge der Durchgangsschlitze 2b legt den Bewegungshub der Riegel 4 fest. Bei einer Schwenkbewegung der Schwenkplatte 6 um den Lagerzapfen 5 wandern die Zapfen 13 in den zugehörigen Führungsschlitzen 6a und Durchgangsschlitzen 2b, wodurch die Schwenkbewegung der Schwenkplatte 6 in eine gegenläufige Verschiebebewegung der Zapfen 13 längs der Durchgangsschlitze 2b und damit der Riegel 4 umgesetzt wird.

Wie aus den Figuren 1 bis 4 ersichtlich, wird die Verriegelungsanordnung aus Riegeln 4 und Schwenkplatte 6 durch zwei Federn 14 in die Verriegelungsstellung vorgespannt. Jede der beiden Federn 14 stützt sich einerseits an einer innen liegenden Stirnfläche des zugehörigen Riegels 4 und andererseits an dem Lagerzapfen 5 ab.

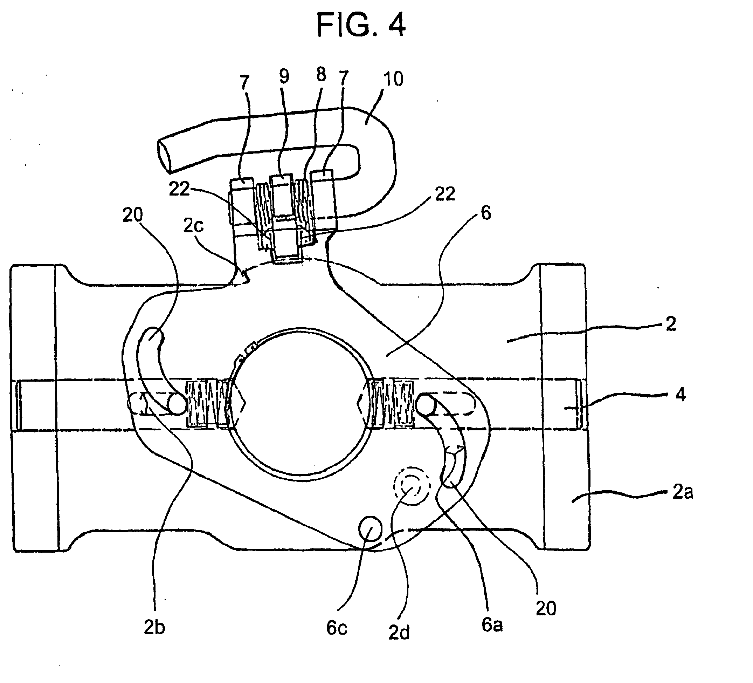

Die Schwenkplatte 6 ist mit einem Ansatz 6b versehen (Fig. 3 und 4), der Ober den oberen Rand des Kupplungsmaulträger 2 herausragt und den schon erwähnten Handgriff 10 trägt. Mit Hilfe des Handgriffs 10 ist die Schwenkplatte 6 zwischen zwei Endstellungen, nämlich einer Verriegelungsstellung und einer Entriegelungsstellung um den Lagerzapfen 5 verschwenkbar. Die Führungsschlitze 6a sind so ausgebildet, daß die Riegel 4 in der Verriegelungsstellung der Schwenkplatte (in Fig. 3 gezeigt) ihrerseits in einer Verriegelungsstellung sind, das heißt relativ weit aus dem Kupplungsmaulträger 2 herausragen. Dagegen sind die Riegel 4 in der Entriegelungsstellung der Schwenkplatte 6 (in Fig. 4 gezeigt) soweit in den Kupplungsmaulträger 2 zurückgezogen, daß letzterer in den Führungsschienen 17 höhenverstellt werden kann.

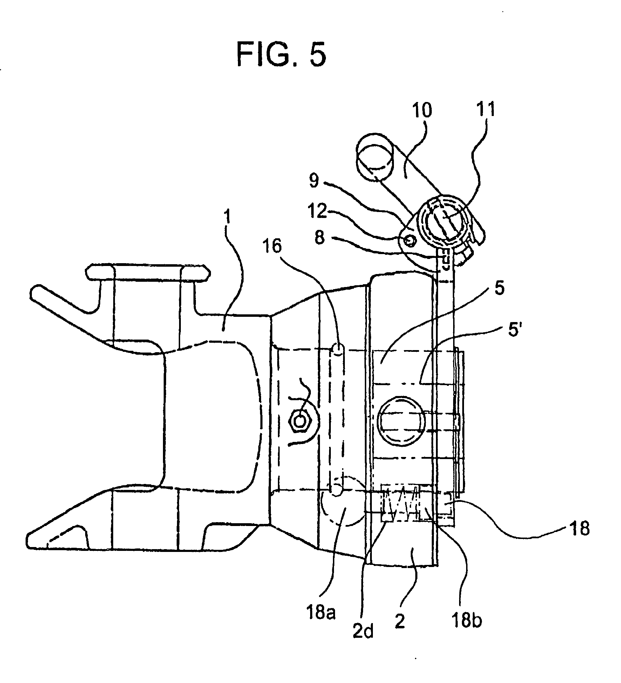

Der Handgriff 10 ist bügelartig, im wesentlichen in Form eines U ausgebildet und mit seinem einen Schenkel drehbar am Ende des Ansatzes 6b der Schwenkplatte 6 gelagert. Dieses Ende des Ansatzes 6b ist gabelartig mit zwei Lagerflanschen 7 ausgebildet, durch deren fluchtende Bohrungen der Handgriff 10 gesteckt ist. Zwischen den beiden Lagerflanschen, die in Fig. 3 gut erkennbar sind, ist ein Sperrnocken 9 auf dem Handgriff 10 angeordnet und mittels einer Spannhülse 11 drehfest mit ihm verbunden. Die Form des Sperrnockens 9 ist insbesondere aus der Seitenansicht von Fig. 5 gut erkennbar. Eine Drehfeder 8 spannt den Handgriff 10 gegenüber dem Ansatz 6b der Schwenkplatte 6 in eine Ruhestellung vor (im Gegenuhrzeigersinn in Fig. 5). In der Ruhestellung stützt sich der Sperrnocken 9 Ober eine ihn im wesentlichen parallel zur Drehachse des Handgriffs 10 durchsetzende Spannhülse 12 am Ansatz 6b ab. In dieser Ruhestellung liegt der Handgriff 10 im wesentlichen in einer horizontalen Ebene, jedenfalls so, daß er möglichst wenig zur Bauhöhe der Anordnung beiträgt. In dieser Ruhestellung des Handgriffs 10 stößt ein Teil des Sperrnockens 9 mit einer Seite an eine Schulter 2c am Rand des Kupplungsmaultragers an, was die Schwenkplatte 6 in ihrer Verriegelungsstellung arretiert (Fig. 3). In der Betriebsstellung des Handgriffs 10 stützt sich der Sperrnocken 9 Ober sich von ihm beidseitig erstreckende Noppen 22 (siehe Fig. 4) am Ansatz 6b ab.

Sollen zur Höhenverstellung der Kupplung die Riegel 4 aus ihrer Verriegelungsstellung in die Entriegelungsstellung überführt werden, dann muß zunächst der Handgriff 10 aus seiner in Fig. 3 gezeigten Ruhestellung in die in Fig. 4 gezeigte Betriebsstellung hochgeklappt werden, in welcher der Sperrnocken 9 außer Eingriff mit der Schulter 2c des Kupplungsmaulträgers 2 ist und der Handgriff vorzugsweise im wesentlichen vertikal Ober dem Schwerpunkt der gesamten Kupplung liegt. Mittels des Handgriffs kann dann die Schwenkplatte 6 gegen die Kraft der Federn 14 aus ihrer in Fig. 3 gezeigten Verriegelungsstellung in die in Fig. 4 gezeigte Entriegelungsstellung verschwenkt werden. Aufgrund der beschriebenen Führung der mit den Riegeln 4 verbundenen Zapfen 13 in den Führungsschlitzen 6a werden bei dieser Verschwenkung der Schwenkplatte 6 die Riegel 4 in ihre Entriegelungsstellung im Kupplungsmaulträger 2 zurückgezogen. Die Kupplung kann nun in eine neue Höhenlage angehoben oder abgesenkt werden. Bei Erreichen der neuen Höhenlage wird entgegengesetzt vorgegangen, das heißt zunächst wird mittels des Handgriffs 10 die Schwenkplatte 6 wieder in die Verriegelungsstellung zurückgeschwenkt und dann der Handgriff 10 selbst in seine Ruhestellung umgeklappt. Sowohl das Umklappen des Handgriffs zum Zwecke der Verriegelung oder Entriegelung der Schwenkplatte 6, als auch das Verschwenken der Schwenkplatte 6 und das Anheben bzw. Absenken der gesamten Kupplung erfolgt durch entsprechende Betätigung jeweils ein und desselben Betätigungselementes, nämlich des Handgriffs 10. Durch die Drehfeder 8 wird der Handgriff 10 in seine Ruhestellung vorgespannt, wodurch zugleich die einzelnen Teile gegeneinander verspannt werden.

Das jeweilige Ende 20 der Führungsschlitze 6a verläuft, zumindest auf der radial innen liegenden Seite, senkrecht zur Bewegungsrichtung der Riegel 4. Außerdem liegen diese Enden 20 bzw. die Mittellinien der Zapfen 13 zusammen mit dem Drehpunkt der Schwenkplatte 6 auf einer geraden Linie, so daß ein nach innen gerichteter Druck auf die in Verriegelungsstellung befindlichen Riegel 4 kein Drehmoment auf die Schwenkplatte 6 zur Folge hat.

Durch die Federn 14 werden die Riegel 4 in ihre Verriegelungsstellung belastet. Sobald nämlich die Schwenkplatte aus ihrer Verriegelungsstellung heraus gedreht ist, erzeugt die Federkraft über die Riegel 4, die Zapfen 13 und die gekrümmte äußere Begrenzungsfläche des jeweiligen Führungsschlitzes 6a ein auf die Schwenkplatte wirkendes Drehmoment, das die Schwenkplatte in die Verriegelungsstellung zurück zu drehen versucht. In soweit entspricht die Funktion dieser Federn 14 derjenigen der in der AT 001 287 U1 beschriebenen Federn. Anders als bei diesem Stand der Technik, stützen sich beide Federn 14 mit ihrem dem Riegel abgewandten Ende aber nicht am Kupplungsmaulträger, sondern am Lagerzapfen 5 ab. Auf diese Weise können dieselben Federn eine von der gerade beschriebenen ersten Funktion unabhängige zweite Funktion, nämlich als Rastfedern für das Kupplungsmaul erfüllen.

Zu diesem Zweck ist in der Umfangsfläche des Lagerzapfens 5 für jeden Riegel 4 eine konische, kalottenförmige oder sonstwie mit in Umfangsrichtung nockenartigen Schrägflächen versehene Rastausnehmung 5a so ausgebildet, daß sie in der Ruhedrehstellung des Kupplungsmauls mit den Riegelbohrungen ausgerichtet sind. Die Federn 14 greifen jeweils Ober ein Rastglied 15 an dem Lagerzapfen an. Beim dargestellten Ausführungsbeispiel sind die Federn 14 Schraubendruckfedern, und die Rastglieder (15) sind Kappen, deren geschlossenes Ende an der Umfangsfläche des Lagerzapfens 5 anliegt und in deren offenes Ende das dem Riegel 4 abgewandte Ende der zugehörigen Feder 14 eingesetzt ist. Die Rastausnehmungen 5a und die Rastglieder 15 sind so ausgebildet, daß die Rastglieder in der Ruhedrehstellung am weitesten in die Rastausnehmungen eintreten und bei einer Drehung des Lagerzapfens aus der Ruhedrehstellung heraus, aus den Rastausnehmungen heraus gedrückt werden. Da die Federn 14 die Rastglieder 15 in die Rastausnehmungen 5a hinein drücken, muß ein bestimmtes Drehmoment aufgebracht werden, damit die Rastglieder gegen die Federkräfte nach außen gedrückt werden können. Dieses Drehmoment stellt ein Losdrehmoment dar, das mindestens auf das Kupplungsmaul einwirken muß bzw. überschritten werden muß, um das Kupplungsmaul aus seiner Ruhedrehstellung zu verdrehen. Das Losdrehmoment hängt von der Federkraft und der Form der Rastausnehmungen 5a sowie der Rastglieder 15 ab, nicht aber vom Verschleißzustand der Lagerung des Lagerzapfens in der Lagerbohrung. Im dargestellten Ausführungsbeispiel sind die Rastausnehmungen 5a als konische Bohrungen dargestellt, in die Rastglieder 15 mit einer entsprechenden konischen äußeren Form eingreifen. Je kleiner der Öffnungswinkel des Konus bei gleicher Federkraft ist, desto größer ist das Losdrehmoment.

Die erfindungsgemäße Doppelfunktion der Federn 14 hat nicht nur den Vorteil des vom Verschleiß im wesentlichen unabhängigen Losdrehmoments, sie erlaubt bei sonst gleichen Abmessungen, im Vergleich zur Federanordnung gemäß der AT 001 287 U1 eine größere Federlänge. Die größere Federlänge wiederum ermöglicht bei dem vom vorgegebenem Hub der Riegel abhängigen Federweg den Einsatz einer weicheren Feder. Diese Federlänge kann im Einzelfall noch dadurch erhöht werden, daß gemäß einer Weiterbildung der Erfindung, der Lagerzapfen 5 in seinem dem Kupplungsmaul abgewandten axialen Abschnitt abgesetzt, d.h., mit geringerem Durchmesser versehen ist und die Rastausnehmungen 5a in der Umfangsfläche des abgesetzten Abschnitts ausgebildet sind, wie dies in Fig. 2 bei 5' mit strichpunktierten Linien angedeutet ist.

Beim soweit beschriebenen Ausführungsbeispiel wird die Verriegelungsanordnung in der Verriegelungsstellung mittels des Handgriffs 10 arretiert und kann nur nach Lösen der Arretierung aus der Verriegelungs- in die Entriegelungsstellung überführt werden. Alternativ kann ein starr an der Schwenkplatte befestigter Handgriff ohne Arretierfunktion verwendet werden. In diesem Fall kann eine Arretierung der Schwenkplatte in deren Verriegelungsstellung mittels der aus AT 001 287 U1 bekannten federbelasteten Raste oder mittels eines Arretierbolzens erfolgen. Zu diesem Zweck können in dem Kupplungsmaulträger 2 und in der Schwenkplatte 6 eine Bohrung 2d bzw. 6c vorgesehen sein, die sich parallel zur Achse des Lagerzapfens 5 erstrecken und so positioniert sind, daß beide Bohrungen in der Verriegelungsstellung der Schwenkplatte 6 miteinander fluchten. In der Bohrung 2d ist ein Arretierbolzen 18 federbelastet so angeordnet, daß er in die Bohrung 6c einschnappt, sobald beide Bohrungen aufeinander ausgerichtet sind (siehe Figuren 2 und 5). Die Bohrung 2d weist eine Ringschulter auf, d.h., ihr dem Kupplungsmaul 1 abgewandtes Ende besitzt einen kleineren Durchmesser als der andere Teil. Der Arretierbolzen 18 ist mit einem Bund 18b versehen, der in der Raststellung an die Ringschulter der Bohrung 2d anstößt. Auf der Kupplungsmaulseite ragt der Arretierbolzen 18 aus dem Kupplungsmaulträger 2 heraus und ist hier mit einem Kopf 18a versehen. An dem Kopf 18a kann der Arretierbolzen 18 entgegen seiner Federvorspannung, in Fig. 5 nach links, soweit zurückgezogen werden, daß er aus der Bohrung 6c herauskommt und die Schwenkplatte freigibt. Wie schon ausgeführt, stellen die dargestellten Bohrungen 6c und 2d sowie der Arretierbolzen 18 eine Alternative zu einer Arretierung durch den Handgriff 10 dar und können somit entfallen, wenn die Arretierung über den in beschriebener Weise ausgebildeten Handgriff 10 erfolgt.

Bei dem anhand der Fig. 1 bis 5 beschriebenen Ausführungsbeispiel sind Ausnehmungen in dem Boden der Führungsnut der Führungsschienen 17 ausgebildet, das heißt sie erstrecken sich in der Bewegungsrichtung der Riegel 4. Um mit diesen Ausnehmungen in Eingriff zu kommen, müssen die Riegel 4 in ihrer Verriegelungsstellung Ober die seitlichen Enden des Kupplungsmaulträgers 2 hinausragen. In der EP 0 155 338 sind Alternativen für die Ausbildung der Riegel und der mit ihnen zusammenwirkenden Ausnehmungen in den Führungsschienen beschrieben, die auch im Rahmen der vorliegenden Erfindung verwendet werden können.

Die Erfindung wurde anhand eines Ausführungsbeispiels erläutert, bei dem zwei Schraubendruckfedern 14 als Federanordnung mit Doppelfunktion eingesetzt sind. Es ist zu betonen, daß die Erfindung nicht auf die Verwendung von Schraubendruckfedern beschränkt ist. Sie stellen zwar eine bevorzugte Realisierung der Federanordnung dar, grundsätzlich spielt aber die Art der Federanordnung keine Rolle, solange sie geeignet ist, die beschriebene Doppelfunktion der Vorspannung der Riegel 4 einerseits und einer Rasteinrichtung für das Kupplungsmaul andererseits zu erfüllen.

## Patentansprüche

1. Höhenverstellbare Anhängerkupplung, insbesondere für landwirtschaftliche Fahrzeuge, umfassend:
ein Kupplungsmaul (1),
einen in Führungsschienen (17) in einer ersten Richtung verstellbar geführten Kupplungsmaulträger (2), an dem das Kupplungsmaul (1) mittels eines sich in einer zur ersten im wesentlichen senkrechten zweiten Richtung durch den Kupplungsmaulträger (2) hindurch erstreckenden Lagerzapfens (5) drehbar gelagert ist,
im Kupplungsmaulträger (2) geführte Riegel (4), die in einer zur ersten und zur zweiten Richtung im wesentlichen senkrechten dritten Richtung zwischen einer Verriegelungsstellung und einer Entriegelungsstellung verstellbar sind, in ihrer Verriegelungsstellung in Ausnehmungen der Führungsschienen (17) eingreifen und den Kupplungsmaulträger (2) in den Führungsschienen (17) gegen eine Verschiebung längs den Führungsschienen (17) verriegeln und in ihrer Entriegelungsstellung den Kupplungsmaulträger (2) zur Verschiebung längs den Führungsschienen (17) freigeben,
eine an dem dem Kupplungsmaul (1) abgewandten Ende des Lagerzapfens (5), diesem gegenüber drehbar gelagerte Schwenkplatte (6), die zur Verstellung der Riegel (4) zwischen deren Verriegelungs- und Entriegelungsstellung ihrerseits zwischen einer Verriegelungsstellung und einer Entriegelungsstellung verschwenkbar ist und über parallel zur Achse des Lagerzapfens (5) angeordnete Zapfen (13) mit den Riegeln (4) gekuppelt ist, und
eine Federanordnung (14), die die Riegel (4) in deren Verriegelungsstellung vorspannt,
**dadurch gekennzeichnet, daß**
eine an dem Lagerzapfen (5) angreifende Rasteinrichtung (5a, 15) vorgesehen ist, durch die das Kupplungsmaul (1) in einer Ruhedrehstellung relativ zum Kupplungsmaulträger (2) elastisch verrastbar ist, und
die Federanordnung so beschaffen ist, daß die von ihr zur Vorspannung der Riegel (4) aufgebrachte Kraft zwischen den Riegeln (4) einerseits und, über die Rasteinrichtung (5a, 15), dem Lagerzapfen (5) andererseits wirkt, derart, daß sie zugleich die Rasteinrichtung beaufschlagt.

2. Anhängerkupplung nach Anspruch 1, **dadurch gekennzeichnet, daß** die Rasteinrichtung wenigstens eine in der Umfangsfläche des Lagerzapfens (5) ausgebildete Rastausnehmung (5a) sowie ein durch die Federanordnung gegen die Umfangsfläche des Lagerzapfens (5) gedrücktes Rastglied (15) aufweist, welches in der Ruhedrehstellung des Kupplungsmauls (1) in die Rastausnehmung (5a) eingreift.

3. Anhängerkupplung nach Anspruch 2, **dadurch gekennzeichnet, daß** die wenigstens eine Rastausnehmung (5a) eine im wesentlichen radiale Bohrung mit konischer oder kalottenförmiger Querschnittsform ist.

4. Anhängerkupplung nach Anspruch 1, 2 oder 3, **dadurch gekennzeichnet, daß** die Federanordnung für wenigstens einen Riegel (4) eine Schraubendruckfeder (14) umfaßt, die einerseits an dem Riegel (4) und andererseits an dem Rastglied (15) angreift.

5. Anhängerkupplung nach den Ansprüchen 2 und 4, **dadurch gekennzeichnet, daß** das Rastglied (15) eine Kappe ist, deren geschlossenes Ende eine zur Rastausnehmung (5a) im wesentlichen komplementäre Form aufweist und in deren offenes ein Ende der Schraubendruckfeder (14) eingesetzt ist.

6. Anhängerkupplung nach Anspruch 5, **dadurch gekennzeichnet, daß** der Lagerzapfen (5) in einem dem Kupplungsmaul (1) zugewandten axialen Abschnitt einen größeren Durchmesser als im übrigen Abschnitt (5') aufweist und die Rastausnehmung (5a) in dem Abschnitt kleineren Durchmessers liegt.

7. Anhängerkupplung nach einem der vorhergehenden Ansprüche, **dadurch gekennzeichnet, daß** zwei Riegel (4) vorgesehen und in fluchtenden Bohrungen auf diametral gegenüberliegenden Seiten des Lagerzapfens (5) geführt sind, wobei die Bohrungen zu einer den Lagerzapfen (5) aufnehmenden Lagerbohrung offen sind und die Federanordnung für jeden Riegel (4) eine gesonderte zwischen den Riegel (4) und den Lagerzapfen (5) gesetzte Feder (14) aufweist.

8. Anhängerkupplung nach einem der vorhergehenden Ansprüche, **dadurch gekennzeichnet, daß** ein zur Höhenverstellung des Kupplungsmaulträgers (2) sowie zur Verschwenkung der Schwenkplatte (6) dienender Handgriff (10) an einem Ansatz (6b) der Schwenkplatte (6) befestigt ist und in der Verriegelungsstellung der Schwenkplatte (6) gegenüber dieser zwischen einer Ruhestellung und einer Betriebsstellung verschwenkbar ist sowie in seiner Ruhestellung durch eine formschlüssige Verbindung zwischen dem Kupplungsmaulträger (2) und dem Handgriff (10) eine Verstellung der Schwenkplatte (6) aus ihrer Verriegelungsstellung verhindert.

9. Anhängerkupplung nach Anspruch 8, **dadurch gekennzeichnet, daß** der bügelartige Handgriff (10) in seiner Ruhestellung in einer im wesentlichen horizontalen Ebene und in seiner Betriebsstellung in einer im wesentlichen vertikalen Ebene liegt.

10. Anhängerkupplung nach einem der vorhergehenden Ansprüche, **dadurch gekennzeichnet, daß** die Zapfen jeweils in einem Führungsschlitz (6a) der Schwenkplatte (6) derart geführt sind, daß eine Drehung der Schwenkplatte zu einer Verschiebung der Riegel führt, wobei der Teil (20) der Führungsschlitze (6a), in dem sich die Zapfen (13) in der Verriegelungsstellung von Schwenkplatte (6) und Riegeln (4) befinden, senkrecht zur Bewegungsrichtung der Riegel (4) verläuft und diese Teile (20) der Führungsschlitze (6a) auf einer gemeinsamen, durch den Drehpunkt der Schwenkplatte (6) gehenden Geraden liegen.

## Claims

1. A height-adjustable trailer coupling, in particular for agricultural vehicles, including:
a coupling head (1),
a coupling head carrier (2) which is guided adjustably in a first direction in guide rails (17) and to which the coupling head (1) is rotatably mounted by means of a mounting journal (5) extending through the coupling head carrier (2) in a second direction substantially perpendicular to the first direction,
locking bars (4) which are guided in the coupling head carrier (2) and which are adjustable between a locking position and an unlocking position in a third direction substantially perpendicular to the first and second directions, which in their locking position engage into openings in the guide rails (17) and lock the coupling head carrier (2) in the guide rails (17) against displacement along the guide rails (17) and which in their unlocking position release the coupling head carrier (2) for displacement along the guide rails (17),
a pivot plate (6) which is mounted rotatably with respect to the mounting journal (5) at the end thereof remote from the coupling head (1) and which for adjustment of the locking bars (4) between the locking and unlocking positions thereof is in turn pivotable between a locking position and an unlocking position and which is coupled to the locking bars (4) by way of projections (13) arranged parallel to the axis of the mounting journal (5), and
a spring arrangement (14) which biases the locking bars (4) into the locking position thereof,
**characterised in that**
there is provided a latching device (5a, 15) which engages the mounting journal (5) and by which the coupling head (1) is elastically latchable in a rest rotational position relative to the coupling head carrier (2) and
the spring arrangement is such that the force applied thereby for biasing the locking bars (4) acts between the locking bars (4) on the one hand and, by way of the latching device (5a, 15), the mounting journal (5) on the other hand, in such a way that at the same time it acts on the latching device.

2. A trailer coupling according to claim 1 **characterised in that** the latching device has at least one latching opening (5a) provided in the peripheral surface of the mounting journal (5) and a latching member (15) which is pressed by the spring arrangement against the peripheral surface of the mounting journal (5) and which engages into the latching opening (5a) in the rest rotational position of the coupling head (1).

3. A trailer coupling according to claim 2 **characterised in that** the at least one latching opening (5a) is a substantially radial bore of a conical or cup-shaped cross-sectional configuration.

4. A trailer coupling according to claim 1, claim 2 or claim 3 **characterised in that** the spring arrangement for at least one locking bar (4) includes a compression coil spring (14) which engages on the one hand the locking bar (4) and on the other hand the latching member (15).

5. A trailer coupling according to claims 2 and 4 **characterised in that** the latching member (15) is a cap whose closed end is of a shape substantially complementary to the latching opening (5a) and into the open end of which is inserted one end of the compression coil spring (14).

6. A trailer coupling according to claim 5 **characterised in that** the mounting journal (5) in an axial portion that is towards the coupling head (1) is of a larger diameter than in the remaining portion (5') and the latching opening (5a) is in the portion of smaller diameter.

7. A trailer coupling according to one of the preceding claims **characterised in that** there are provided two locking bars (4) and they are guided in aligned bars on diametrally opposite sides of the mounting journal (5), wherein the bores are open to a mounting bore receiving the mounting journal (5) and the spring arrangement for each latching bar (4) has a separate spring (14) fitted between the locking bar (4) and the mounting journal (5).

8. A trailer coupling according to one of the preceding claims **characterised in that** a handle (10) serving for heightwise adjustment of the coupling head carrier (2) and for pivotal movement of the pivot plate (6) is fixed to a projection (6b) on the pivot plate (6) and in the locking position of the pivot plate (6) is pivotable with respect thereto between a rest position and an operative position and in its rest position prevents displacement of the pivot plate (6) out of its locking position by a positively locking connection between the coupling head carrier (2) and the handle (10).

9. A trailer coupling according to claim 8 **characterised in that** the loop-like handle (10) is in a substantially horizontal plane in its rest position and in a substantially vertical plane in its operative position.

10. A trailer coupling according to one of the preceding claims **characterised in that** the projections are each guided in a respective guide slot (6a) in the pivot plate (6) in such a way that a rotation of the pivot plate leads to a displacement of the locking bars, wherein the part (20) of the guide slots (6a), in which the projections (13) are disposed in the locking position of the pivot plate (6) and the locking bars (4), extends perpendicularly to the direction of movement of the locking bars (4) and said parts (20) of the guide slots (6a) are on a common straight line passing through the pivot point of the pivot plate (6).

## Revendications

1. Attelage à hauteur réglable pour remorque, notamment pour véhicules agricoles, comportant :
une mâchoire d'attelage (1),
un support de mâchoire d'attelage (2) guidé de manière réglable dans des rails de guidage (17) dans une première direction, sur lequel la mâchoire d'attelage (1) est montée de manière rotative au moyen d'un tourillon de palier (5) s'étendant à travers le support de mâchoire d'attelage (2) dans une deuxième direction sensiblement perpendiculaire à la première direction,
des verrous (4) guidés dans le support de mâchoire d'attelage (2), qui peuvent être réglés entre une position de verrouillage et une position de déverrouillage dans une troisième direction sensiblement perpendiculaire à la première direction et à la deuxième direction, se mettent en prise, dans leur position de verrouillage, dans des évidements des rails de guidage (17) et verrouillent le support de mâchoire d'attelage (2) dans les rails de guidage (17) pour les empêcher de se déplacer le long des rails de guidage (17) et, dans leur position de déverrouillage, libèrent le support de mâchoire d'attelage (2) pour qu'il se déplace le long des rails de guidage (17),
une plaque pivotante (6) montée contre l'extrémité du tourillon de palier (5) opposée à la mâchoire d'attelage (1) de manière à pouvoir tourner par rapport audit palier, laquelle plaque, pour régler les verrous (4) entre leur position de verrouillage et leur position de déverrouillage, peut pivoter pour sa part entre une position de verrouillage et une position de déverrouillage et est couplée aux verrous (4) par des tourillons (13) disposés parallèlement à l'axe du tourillon de palier (5), et
un système de ressort (14), qui précontraint les verrous (4) dans leur position de verrouillage,
**caractérisé en ce que**
il est prévu un système d'encliquetage (5a, 15) appliqué contre le tourillon de palier (5), par l'intermédiaire duquel la mâchoire d'attelage (1) peut être encliquetée de manière élastique dans une position rotative de repos par rapport au support de mâchoire d'attelage (2), et
le système de ressort est réalisé de sorte que la force appliquée par celui-ci pour précontraindre les verrous (4) agit d'une part entre les verrous (4) et, par l'intermédiaire du système d'encliquetage (5a, 15), d'autre part sur le tourillon de palier (5), de telle sorte qu'il sollicite simultanément le système d'encliquetage.

2. Attelage pour remorque selon la revendication 1, **caractérisé en ce que** le système d'encliquetage comprend au moins un évidement d'encliquetage (5a) formé dans la surface périphérique du tourillon de palier (5) ainsi qu'un élément d'encliquetage (15) pressé par le système de ressort contre la surface périphérique du tourillon de palier (5), lequel élément se met en prise, dans la position rotative de repos de la mâchoire d'attelage (1), dans l'évidement d'encliquetage (5a).

3. Attelage pour remorque selon la revendication 2, **caractérisé en ce que** l'au moins un évidement d'encliquetage (5a) est un alésage sensiblement radial doté d'une section transversale conique ou en forme de calotte.

4. Attelage pour remorque selon la revendication 1, 2, ou 3, **caractérisé en ce que** le système de ressort pour au moins un verrou (4) comporte un ressort de compression cylindrique (14), qui s'applique d'une part contre le verrou (4) et d'autre part contre l'élément d'encliquetage (15).

5. Attelage pour remorque selon les revendications 2 et 4, **caractérisé en ce que** l'élément d'encliquetage (15) est un capuchon, dont l'extrémité fermée présente une forme sensiblement complémentaire de l'évidement d'enclique-tage (5a) et dans l'extrémité ouverte duquel est insérée une extrémité du ressort de compression cylindrique (14).

6. Attelage pour remorque selon la revendication 5, **caractérisé en ce que** le tourillon de palier (5) comprend dans une section axiale tournée vers la mâchoire d'attelage (1) un diamètre plus grand que dans la section restante (5') et l'évidement d'encliquetage (5a) se situe dans la section présentant un diamètre plus petit.

7. Attelage pour remorque selon l'une quelconque des revendications précédentes, **caractérisé en ce que** deux verrous (4) sont prévus et sont guidés dans les alésages alignés sur les faces diamétralement opposées du tourillon de palier (5), les alésages étant ouverts sur un alésage de palier recevant le tourillon de palier (5) et le système de ressort comprenant pour chaque verrou (4) un ressort (14) spécial placé entre les verrous (4) et le tourillon de palier (5).

8. Attelage pour remorque selon l'une quelconque des revendications précédentes, **caractérisé en ce qu'**une poignée (10) servant à régler la hauteur du support de mâchoire d'attelage (2) et à faire pivoter la plaque pivotante (6) est fixée à une saillie (6b) de la plaque pivotante (6), et dans la position de verrouillage de la plaque pivotante (6), peut pivoter par rapport à celle-ci entre une position de repos et une position de fonctionnement et, dans sa position de repos, par l'intermédiaire d'une liaison par coopération de formes entre le support de mâchoire d'attelage (2) et la poignée (10), empêche la plaque pivotante (6) de sortir de sa position de verrouillage.

9. Attelage pour remorque selon la revendication 8, **caractérisé en ce que** la poignée (10) en forme d'étrier se situe, dans sa position de repos, dans un plan sensiblement horizontal et, dans sa position de fonctionnement, dans un plan sensiblement vertical.

10. Attelage pour remorque selon l'une quelconque des revendications précédentes, **caractérisé en ce que** les tourillons sont guidés respectivement dans une fente de guidage (6a) de la plaque pivotante (6), de telle sorte qu'une rotation de la plaque pivotante entraîne un déplacement des verrous, la partie (20) des fentes de guidage (6a), dans laquelle les tourillons (13) se situent dans la position de verrouillage de la plaque pivotante (6) et des verrous (4), s'étend perpendiculairement à la direction de déplacement des verrous (4) et ces parties (20) des fentes de guidage (6a) se situent sur une ligne droite commune, traversant le centre de rotation de la plaque pivotante (6).
